# EUROPÄISCHE PATENTANMELDUNG

(11) **EP 1 559 991 A1**
(43) Veröffentlichungstag der Anmeldung: **03.08.2005**
(21) Anmeldenummer: 04002054.7
(22) Anmeldetag: 30.01.2004
(51) Int. Cl.: G01B 7/30, G01C 9/00

(54) **Einrichtung zur Einstellung und/oder Überwachung der Ausrichtung eines Arbeitsgeräts**

(71) Anmelder: Dietsch, Hubert, 64653 Lorsch (DE)
(72) Erfinder: Dietsch, Hubert, 64653 Lorsch (DE)
(74) Vertreter: Helber, Friedrich G., Dipl.-Ing.

(57) **Zusammenfassung**

Einrichtung zur Einstellung und/oder Überwachung der Lage eines Arbeitsgeräts auf eine innerhalb eines zulässigen Bereichs relativ zum Untergrund ausgerichtete Sollposition. Das Arbeitsgerät (wie z.B. ein Lastkraftwagen) weist eine mit wenigstens einem Abweichungen von der Sollposition um das zulässige Maß erfassenden Sensor (30) versehene Sensoranordnung auf, welche bei einer Abweichung der Istposition des Arbeitsgeräts über den zulässigen Bereich der Sollposition hinaus ein Signal entwickelt, welches einer nachgeschalteten Signalverarbeitungseinrichtung (40) zugeführt wird. Der Sensor hat dabei z.B. eine Quecksilberfüllung (34). Bei Überschreitung der Abweichung kann ein akustischer Alarm über Hupe bzw. Sirene (42) und ein optischer Alarm über Leuchten (44,46) ausgelöst werden. Ebenso ist eine Abschaltung oder Blockierung des Arbeitsgeräts sowie Regeleingriffe vorgesehen.

## Beschreibung

Die Erfindung betrifft eine Einrichtung und/oder Überwachung der Lage eines verfahrbaren oder ortsfest installierten Arbeitsgeräts auf eine innerhalb eines vorgegebenen zulässigen Bereichs relativ zum Untergrund ausgerichtete Sollposition.

Das Problem der Ausrichtung eines Arbeitsgeräts auf eine vorgegebene Position zum Untergrund stellt sich insbesondere in solchen Fällen, in denen das Arbeitsgerät im Betrieb statischen und/oder dynamischen Änderungen der Lage seines Schwerpunkts unterliegt, welche ein solches Ausmaß annehmen können, dass die Gefahr des Kippens des Arbeitsgeräts beim speziellen Betriebszustand nicht ausgeschlossen werden kann und deshalb auch eine erhöhte Unfallgefahr für das Bedienungspersonal oder im Umkreis des Geräts beschäftigte Personen besteht. Als Beispiel für derartige verfahrbare Arbeitsgeräte seien beispielsweise Lastkraftwagen mit durch Kippen entleerbare Ladeflächen für schweres Schüttgut, wie Kies od.dgl. oder mit Ladeeinrichtungen nach Art von kranartigen Hubeinrichtungen versehene Fahrzeuge genannt, mit denen - beispielsweise auf Paletten gestapeltes - Ladegut von der Ladefläche abgehoben und zur Ladefläche versetzt abgesetzt werden kann. Auch Autokrane mit Teleskopauslegern oder auf Lkw-Chassis verfahrbare Betonmischer oder Betonpumpen, welche die Abgabe von zuvor gemischtem und noch nicht abgebundenem Beton über in Auslegern geführte Betonleitungen ermöglichen, seien genannt. Um die Gefahr des Umkippens solcher Fahrzeuge während des Arbeitens unter ungünstigen Arbeitsbedingungen mit Schwerpunktveränderungen zu verringern, sind diese Fahrzeuge häufig mit über die senkrechte Projektion des Fahrzeugs ausfahrbaren und auf dem Untergrund aufsetzbaren Abstützeinrichtungen versehen, die zudem im außen liegenden Stützbereich mechanisch oder hydraulisch höhenveränderlich ausgebildet sind, um das Arbeitsgerät in einer Sollposition abzustützen, in welcher bei Einhaltung der aufgrund der geometrischen Auslegung des Geräts unter Berücksichtigung der beim Arbeiten unter höchsten Belastungen und ungünstigen Lastangriffsbedingungen gegebenenfalls zusätzlich auftretenden errechneten Kräfte noch eine Sicherheit gegen Umkippen gegeben ist. Die Einstellung der Stützeinrichtung wird dabei in der Regel so vorgenommen, dass die das Ladegut oder das Ladegerät tragenden Ladepritschen bzw. -plattformen im Wesentlichen möglichst horizontal, d.h. parallel zu einem ebenflächigen Untergrund, stehen. Als Einstellhilfe werden hierbei am Arbeitsgerät fest installierte und wahlweise ansetzbare Libellen oder Wasserwaagen verwendet. Solange die Abstützung auf hinreichend standfestem Untergrund erfolgt, kann damit die Unfallgefahr durch Umkippen des Arbeitsgeräts weitgehend ausgeschlossen werden. Das gilt grundsätzlich auch für ortsfest installierte Geräte, z.B. Bau- oder Montagekrane mit langen Auslegern, bei denen der Lastangriff oft unter einem erheblichen Hebelarm in Bezug auf die Fläche der Abstützung am Untergrund erfolgt und darüber hinaus zusätzlich dynamische Kräfte beim Anheben bzw. Verschwenken des Auslegers auftreten. Auch zusätzliche Windkräfte sind hierbei in die Sicherheitsbetrachtung einzubeziehen.

Auch bei solchen Geräten wird neben einem Ausgleich der Kräfte durch geeignet angeordnete Gegengewichte eine möglichst großflächige Abstützung in eine Sollposition am Untergrund vorgesehen. Bei der relativ großen Höhe der in Frage stehenden Kräne und den zum Teil erheblichen Längen der Ausleger ist dabei die Einhaltung der eingestellten Sollposition der Abstützfläche zum Untergrund innerhalb eines geringen Sollbereichs besonders wichtig.

Insbesondere auf Baustellen und im Gelände mit weichem Untergrund ist zusätzlich die Gefahr gegeben, dass eine an sich korrekt getroffene Einstellung durch die beim Betrieb des Arbeitsgeräts auftretenden und über die Abstützung in den Untergrund eingeleitete Kräfte der dieser partiell nachgibt, so dass es eine Veränderung der zunächst korrekt eingestellten Sollposition kommt. Unter den auf Baustellen und im Gelände herrschenden Arbeitsbedingungen bleiben solche Veränderungen, insbesondere dann, wenn sie nur allmählich erfolgen, vom Personal oft unbemerkt, so dass es schließlich zu unfallträchtigen Situationen bis hin zum Umstürzen oder Kippen des Arbeitsgeräts kommen kann.

Der Erfindung liegt demgegenüber die Aufgabe zugrunde, eine Einrichtung zur Einstellung und/oder Überwachung der Lage solcher Arbeitsgeräte zu schaffen, welche ohne die bei Überwachung durch menschliches Personal gegebene Unwägbarkeiten die Einstellung und Überwachung des Geräts vorzunehmen erlaubt.

Ausgehend von einer Einrichtung der eingangs erwähnten Art wird diese Aufgabe erfindungsgemäß dadurch gelöst, dass das Arbeitsgerät eine mit mindestens einem Abweichungen von der Sollposition um das zulässige Maß erfassenden Sensor versehene Sensoranordnung aufweist, welche bei einer Abweichung der Istposition des Arbeitsgeräts über den zulässigen Bereich der Sollposition hinaus ein Signal entwickelt, welches einer nachgeschalteten Signalverarbeitungseinrichtung zugeführt wird, und dass die Signalverarbeitungseinrichtung eine Steuerschaltung zur Ansteuerung einer optischen und/oder akustischen Alarmeinrichtung aufweist. Sensoranordnungen mit derartigen mechanisch, elektrisch, elektromagnetisch oder elektrodynamisch arbeitenden Sensoren stehen in den unterschiedlichsten Ausgestaltungen, beispielsweise in Form von pendelnd aufgehängten und optisch oder elektrisch überwachten Signalgebern, Quecksilberschaltern oder aber auch berührungslos aufgrund der Änderung der Feldstärke von induktiven oder Magnetfeldern bei Lageänderungen arbeitende Signalelementen zur Verfügung. Mit der erfindungsgemäßen Einrichtung wird dadurch gewährleistet, dass die genaue Einstellung der im Hinblick auf optimale Kippsicherheit beim Betrieb des Arbeitsgeräts festgelegten Sollposition vor der Inbetriebnahme ermittelt wird, so dass die Bedienungsperson sicher sein kann, dass nach der Inbetriebnahme unter allen voraussehbaren Arbeitsbedingungen eine Kippgefahr ausgeschlossen ist. Sollte sich die Sollposition während des Betriebs des Arbeitsgeräts - beispielsweise durch einseitiges Nachgeben von weichem Untergrund - unzulässig verändern, wird wieder die Alarmeinrichtung ausgelöst und die Bedienungsposition wird den Betrieb des Arbeitsgeräts sofort stoppen und das Gerät insgesamt in die Sollposition zurückstellen, bevor es wieder in Betrieb genommen wird.

Die Sensoranordnung wird in bevorzugter Ausgestaltung zweckmäßig so am Arbeitsgerät angeordnet, dass der wenigstens eine Sensor ausgehend von einer in einer gerätefesten Ebene liegenden Sollposition rechtwinklig zu einer in der gerätefesten Ebene liegenden Achse verlaufende Neigungsänderungen der Ebene erfasst. Diese Ausgestaltung ist insbesondere dann zweckmäßig, wenn eine Schwerpunktsänderung des Arbeitsgeräts im Betrieb nur in einer Verkippung oder Verschwenkung um eine in der genannten Ebene liegende Kippachse erfolgt.

Wenn die Veränderungen der Lage der gerätefesten Ebene beim Arbeiten des Arbeitsgeräts dagegen nicht vorhersagbar ist, ist in erfindungsgemäßer Weiterbildung vorgesehen, dass die Sensoranordnung wenigstens zwei Sensoren aufweist, welche so am Arbeitsgerät angeordnet sind, dass sie die Neigungsänderungen der gerätefesten Ebene in jeweils einer von zwei in der Ebene liegenden zueinander rechtwinklig verlaufende Achse erfassen. Durch Superponieren, d.h. rechnerische Verknüpfung der über die Sensoren gesondert erfassten Neigungsänderungen kann dann die tatsächliche Lageänderung der Ebene exakt erfasst werden.

Die gerätefeste Ebene verläuft dabei in der Regel in der Sollposition des zu überwachenden oder einzustellenden Arbeitsgeräts in horizontaler Lage, obwohl grundsätzlich in Sonderfällen nicht ausgeschlossen ist, dass die gerätefeste Ebene bewusst in einer in Bezug auf einen horizontalen Untergrund geneigten Lage vorgesehen wird, um so z.B. infolge eines geneigten Untergrunds oder infolge von einer entsprechend versetzten außermittigen Lage des Schwerpunkts des Geräts gegebene statische Bedingung von vornherein auszugleichen.

Es kann daher auch von Vorteil sein, wenn die gerätefeste Ebene in bezüglich einer horizontalen Sollposition abweichende Sollpositionen verstellbar am Arbeitsgerät angeordnet ist.

Zusätzlich oder alternativ zur optischen und/oder akustischen Alarmauslösung durch die Alarmeinrichtung kann die Signalverarbeitungseinrichtung auch eine Ansteuerschaltung zur Abschaltung, Blockierung der negativen Funktionen oder Reversierung der Arbeitsfunktionen im Sinne einer positiven Veränderung der Funktionen des Arbeitsgeräts aufweisen. Dadurch wird dann sichergestellt, dass weitere Veränderungen der Ausrichtung des Arbeitsgeräts durch Kräfte die während des fortgesetzten Arbeitsvorgangs vor der Abschaltung durch das Personal entstehen, in jedem Fall vermieden werden.

Darüber hinaus ist es auch möglich, dass die Signalverarbeitungseinrichtung mit einer Ansteuerschaltung für am Arbeitsgerät vorgesehene Einstellorgane bei einem aufgrund einer Abweichung von der Sollposition um das zulässige Maß von der Sensoranordnung erzeugten Signal im Sinne einer Rückstellung in den Bereich der Sollposition ansteuert. Dies kann z.B. dadurch geschehen, dass die durch eine Hydraulik oder auch mechanisch - beispielsweise eine Gewindespindel - erfolgende Abstützung des Arbeitsgeräts am Boden durch hydraulische Nachsteuerung bzw. motorische Drehung der Gewindespindel so beeinflusst wird, dass die Veränderung der Abstützhöhe an den Auslegerstützen durch entsprechende Nachsteuerung ausgeglichen wird.

Die Erfindung ist in der folgenden Beschreibung eines Ausführungsbeispiels näher erläutert, und zwar zeigt:
Fig. 1 eine Seitenansicht eines im speziellen Fall als Rückwärtskipper ausgebildeten Lastkraftwagen für den Transport von Schüttgut, welcher mit einer in der erfindungsgemäßen Weise ausgebildeten Einstellung ausgerüstet sein möge; und
Fig. 2 ein schematisches Funktionsschaltbild eines Ausführungsbeispiels einer erfindungsgemäßen Einrichtung, wie sie bei dem Rückwärtskipper gemäß Fig. 1 Verwendung finden kann.

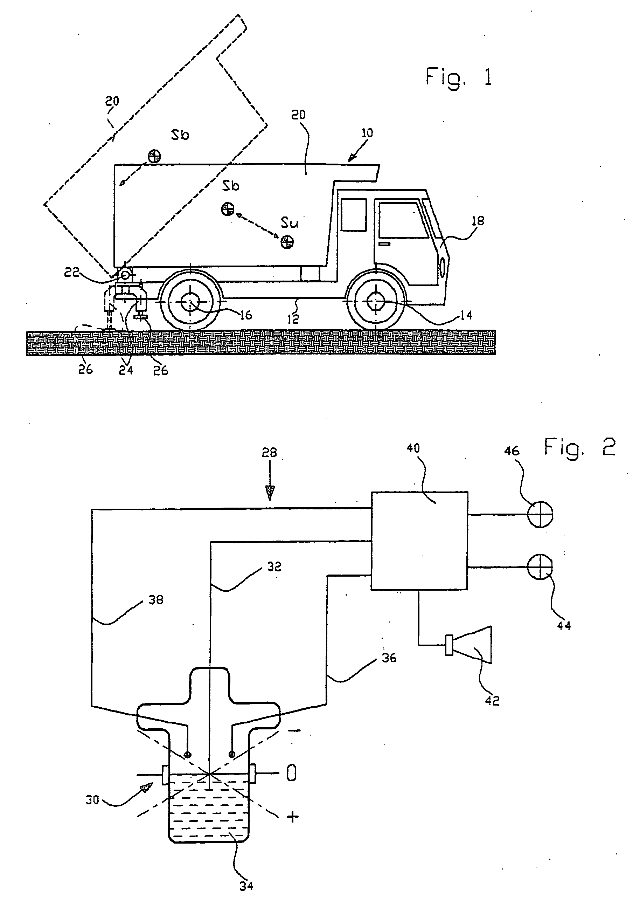

In Figur 1 ist ein in seiner Gesamtheit mit 10 bezeichneter Lastkraftwagen dargestellt, welcher auf seinem Rahmen oder Chassis 12 ein Zweiachs-Fahrwerk mit einer Vorderachse 14 und einer Hinterachse 16 aufweist und an seinem vorderen Ende eine Fahrerkabine 18 trägt. Zur Aufnahme des Förderguts ist auf dem Chassis zur Aufnahme zu transportierendem Schüttgut eine Mulde 20 mit hohem Fassungsvermögen um eine im rückwärtigen Endbereich des Chassis 12 vorgesehene querverlaufende Kippachse 22 hochschwenkbar angeordnet. Das Hochschwenken bzw. Absenken der lastaufnehmenden Mulde 20 kann in üblicher Weise durch (nicht gezeigte) hydraulische Zylinder erfolgen, die am Chassis 12 einerseits und an der Mulde 20 andererseits angelenkt, d.h. gelenkig angekoppelt sind und über eine vom Motor des Lastkraftwagens 10 antreibbare Hydraulikpumpe mit Hydraulikmedium aus einem Hydrauliktank beaufschlagbar sind.

In der Zeichnungsfigur ist die abgesenkte Mulde dargestellt, wobei der Schwerpunkt des Fahrzeugs ohne Ladegut mit Sᵤ und den infolge der Beladung mit schwerem Schüttgut veränderte Schwerpunkt mit S_{b} schematisch veranschaulicht ist.

Zusätzlich ist - strichpunktiert - die zum Abkippen des Ladeguts über die Rückseite des Chassis 12 hochgeschwenkte Lademulde 20 angedeutet, wobei erkennbar ist, dass der Schwerpunkt der beladenen Lademulde in horizontaler Richtung bereits über die Mittelachse der rückwärtigen Radachse zum rückwärtigen Ende des Lkw versetzt ist, so dass die beladene Mulde bereits ein Kippmoment um die Mittelachse der Hinterachse des Fahrzeugs ausübt, welchem das von dem vor der Hinterachse liegenden Teil des Chassis, dem Motor, der Vorderachse und der Fahrerkabine erzeugte Moment entgegenwirkt.

Beim Abkippen des in der Mulde enthaltenen Ladeguts rutscht dieses zur Muldenrückwand und der Schwerpunkt der Ladung verschiebt sich weiter nach rückwärts, so dass nicht auszuschließen ist, dass das Kippmoment letztlich größer wird als das vom restlichen Fahrzeuggewicht erzeugte, dem Kippen entgegenwirkende Moment. Dann würde das Fahrzeug insgesamt um die Mittelachse der Hinterachse hochgeschwenkt, was zu einer unfallträchtigen Situation führen kann.

Am rückwärtigen Ende des Chassis sind deshalb noch ausschwenkbare Stützen 24 mit am freien Ende vorgesehenen, duch eine Gewindespindel höhenverstellbaren Fußplatte 26 vorgesehen. In der Zeichnungsfigur ist die eingeklappte Lage der rechten hinteren Abstützung mit hochgeschraubter Fußplatte 26 dargestellt, während in strichpunktierter Darstellung die ausgeschwenkte Stütze 24 mit am Untergrund abgestützter Fußplatte 26 zusätzlich veranschaulicht ist.

Aufgrund der konstruktiven Vorgaben des Fahrzeugs, wie Gewicht der einzelnen Baugruppen und Lage und Abstand der Radachse sowie Schwerpunktlage des unbeladenen und des mit maximaler Beladung belasteten Fahrzeugs lässt sich errechnen, ob und ggf. unter welchen Bedingungen eine Kippgefahr für das Fahrzeug bei der Rückwärtsentladung besteht, wobei bei dieser Berechnung von der horizontalen Stellung des Fahrzeugs, beispielsweise des Rahmens oder Chassis ausgegangen wird. Es ist klar, dass die Kippgefahr sich erhöht, wenn der Entladevorgang auf einem in Fahrtrichtung des Fahrzeugs 10 ansteigenden schräg geneigten Untergrund erfolgt, so dass dann bereits Sorge für eine Abstützung getragen werden muss, wenn das Fahrzeug rechnerisch auf horizontalem ebenflächigen Untergrund noch nicht kippgefährdet ist. Um den Fahrer des Kraftfahrzeugs hier eine Entscheidungshilfe in Bezug auf die zusätzliche Abstützung des Kraftfahrzeugs durch die Stütze 24 zu geben, ist im Fahrzeug eine in der erfindungsgemäßen Weise ausgebildeten Einrichtung zur Einstellung bzw. Überwachung der Lage des Fahrzeugs eingebaut.

In Fig. 2 ist schematisch ein Schaltbild einer solchen - insgesamt mit 38 bezeichneten - Einrichtung von einfachstem Aufbau dargestellt. Eine die Lage der Ladefläche der Mulde in Bezug auf die horizontale Ausrichtung zum Untergrund überwachender Sensor 30 ist schematisch als Quecksilberschalter dargestellt, der praktisch von einem mit Quecksilber teilgefüllten geschlossenen Gefäß gebildet wird, durch dessen Oberseite insgesamt drei im Innern des Gefäßes Kontaktenden aufweisende elektrische Leitungen hindurchgeführt sind. Die in der Zeichnungsfigur mittlere Leitung 32 taucht mit ihrem gefäßinneren Ende in die Quecksilberfüllung 34 ein, d.h. diese Leitung 32 steht in elektrischem Kontakt mit der Quecksilberfüllung. Die beiden weiteren Leitungen 36 und 38 sind in den oberhalb des Spiegels der Quecksilberfüllung 34 liegenden freien Raum geführt, wobei in der mit 0 veranschaulichten horizontal ausgerichteten Stellung die freien Enden der Leitung 36 und 38 nicht in die Quecksilberfüllung 34 eintauchen. Wenn das Fahrzeug 10 in geneigtem Gelände steht, steht zwangsläufig auch das Chassis 12 und somit die Bezugsebene 0 des Sensors 30 schräg geneigt, was durch die strichpunktierten mit + für eine Abwärtsneigung und mit - für eine Aufwärtsneigung bezeichneten strichpunktierten Linien veranschaulicht sein möge. Da der Spiegel der Quecksilberfüllung 34 durch die Schwerkraft zwangsläufig weiterhin horizontal verläuft, kommt es ab einer gewissen Neigung zwangsläufig zu einer Stellung des Sensors 30, in welcher entweder das freie Ende der Leitung 36 oder das freie Ende der Leitung 38 in die Quecksilberfüllung 34 eintaucht und dann einen Stromfluss über die mittlere Leitung 38 zurück durch die Leitung 36 oder 38 ermöglicht. Die Leitungen 32, 36 und 38 sind an einer schematisch als quadratischer Block dargestellten Signalverarbeitungseinrichtung 40 angeschlossen, in welcher das beim Fließen eines Stroms über die Leitung 32 und 36 bzw. 38 erzeugte elektrische Signal in ein von einer Hupe oder Sirene 42 abgestrahltes akustisches Signal oder auch in ein durch Aktivierung einer Alarmleuchte 44 bzw. 46 erkennbares optisches Signal umgeformt wird, welches dem Fahrer des Lkw's anzeigt, dass die zulässige Abweichung der Lage des Lastkraftwagens 10 von der horizontalen Lage nicht mehr gegeben ist, so dass er entweder die zusätzliche Abstützung über die vorgesehene Abstützeinrichtung 24, 26 vornehmen oder den Lastkraftwagen 10 neu positionieren kann, dass er sich in zulässiger, d.h. nicht kippgefährdeter Lage, zum Untergrund befindet.

Es ist ersichtlich, dass die in Verbindung mit Fig. 2 beschriebene Einstell- und/oder Überwachungseinrichtung auch anspricht, wenn der ursprünglich kippsicher platzierte Lastkraftwagen 10 aufgrund von nachgebendem Untergrund unter den Hinterrädern eine kippgefährdete Schräglage annimmt.

Es ist ersichtlich, dass im Rahmen des Erfindungsgedankens Abwandlungen und Weiterbildungen des beschriebenen Ausführungsbeispiels der Einstell- und/oder Überwachungseinrichtung ebenso wie von deren Einsatzfall verwirklichbar sind. Anstelle des als Quecksilberschalters beschriebenen Sensors können andere Bauarten von Sensoren verwendet werden, welche geeignet sind, die Veränderungen der Ausrichtung einer (ideellen) gerätefesten Bezugsebene in Bezug auf eine vorgegebene Sollposition zu überwachen. Bei solchen Geräten, bei denen die Änderung der Neigung der Bezugsebene nicht nur - wie beim beschriebenen Ausführungsbeispiel des Rückwärtskippers - um eine gerätefeste Achse zu erwarten steht, sondern aufgrund von Schwerpunktänderungen beim Einsatz des Geräts in unterschiedlichen Richtungen erfolgen kann, können Sensoranordnungen mit wenigstens zwei unterschiedliche Koordinatenrichtungen der Bezugsebene bezüglich der Neigung überwachende Sensoren eingesetzt werden, deren Überwachungssignale durch mathematische Verknüpfungen die Ermittlung der Größe und Richtung der tatsächlichen Veränderung der Neigung festzustellen erlauben. Als Beispiel für einen Anwendungsfall, bei welchem solche Sensoranordnungen eingesetzt werden können, seien hier als so genannte "Dreiseitenkipper" ausgebildete Lastkraftwagen genannt, bei denen eine Entladung nicht nur durch Hochschwenken der Ladefläche um eine rückwärtige Querachse, sondern zusätzlich auch eine Seitenentladung durch wahlweise Verschwenkung um eine seitliche Längsachse möglich ist.

Die beim beschriebenen Ausführungsbeispiel als reine Alarmanlage beschriebene Einrichtung, welche den Eingriff einer Bedienungsperson erfordert, wenn das überwachte Arbeitsgerät in unzulässiger Arbeitsstellung steht bzw. während des Arbeitens in eine solche unzulässige Arbeitsstellung gerät, kann die Einrichtung auch so ausgebildet werden, dass bei einer Veränderung der zulässigen Lage des Arbeitsgeräts die Arbeitsfunktionen selbsttätig abgeschaltet oder blockiert werden, oder - im Falle des Vorhandenseins von eine Lageänderung des Arbeitsgeräts ermöglichenden ansteuerbaren Abstützeinrichtungen - kann die Einrichtung auch als selbsttätige Regeleingriffe zur positiven Rückführung des Arbeitsgeräts in den Bereich der Sollposition auslösende Regeleinrichtung durch entsprechende Ansteuerung der Abstützeinrichtungen ausgestaltet werden.

## Patentansprüche

1. Einrichtung zur Einstellung und/oder Überwachung der Lage eines verfahrbaren oder ortsfest installierten Arbeitsgeräts auf eine innerhalb eines vorgegebenen zulässigen Bereichs relativ zum Untergrund ausgerichtete Sollposition,
**dadurch gekennzeichnet,**
**dass** das Arbeitsgerät (z.B. 10) eine mit wenigstens einem Abweichungen von der Sollposition (10) um das zulässige Maß erfassenden Sensor (30) versehenen Sensoranordnung aufweist, welche bei einer Abweichung der Istposition des Arbeitsgeräts über den zulässigen Bereich der Sollposition hinaus ein Signal entwickelt, welches einer nachgeschalteten Signalverarbeitungseinrichtung (40) zugeführt wird, und
**dass** die Signalverarbeitungseinrichtung (40) eine Steuerschaltung zur Ansteuerung einer optischen und/oder akustischen Alarmeinrichtung (42; 44, 46) aufweist.

2. Einrichtung nach Anspruch 1, **dadurch gekennzeichnet, dass** der wenigstens eine Sensor (30) der Sensoranordnung so am Arbeitsgerät (10) angeordnet ist, dass er ausgehend von einer in einer gerätefesten Ebene liegenden Sollposition rechtwinklig zu einer in der gerätefesten Ebene liegenden Achse (22) verlaufende Neigungsänderungen der Ebene erfasst.

3. Einrichtung nach Anspruch 1, **dadurch gekennzeichnet, dass** die Sensoranordnung wenigstens zwei Sensoren (30) aufweist, welche so am Arbeitsgerät (10) angeordnet sind, dass sie die Neigungsänderungen der gerätefesten Ebene in jeweils einer von zwei in der Ebene liegenden zueinander rechtwinklig verlaufenden Achsen erfassen.

4. Einrichtung nach Anspruch 2 oder 3, **dadurch gekennzeichnet, dass** die gerätefeste Ebene in der Sollposition (0) horizontal verläuft.

5. Einrichtungen nach Anspruch 2 oder 3, **dadurch gekennzeichnet, dass** die gerätefeste Ebene in bezüglich einer horizontalen Sollposition abweichende Sollposition verstellbar am Arbeitsgerät angeordnet ist.

6. Einrichtung nach einem der Ansprüche 1 bis 5, **dadurch gekennzeichnet, dass** die Signalverarbeitungseinrichtung (40) eine Ansteuerschaltung zur Abschaltung oder Reversierung der Arbeitsfunktionen des Arbeitsgeräts (10) aufweist.

7. Einrichtung nach einem der Ansprüche 1 bis 5, **dadurch gekennzeichnet, dass** die Signalverarbeitungseinrichtung (40) eine Ansteuerschaltung für am Arbeitsgerät (10) vorgesehenes Lage-Einstellorgane (z.B. 24, 26) aufweist, welche die Lage-Einstellorgane bei einem aufgrund einer Abweichung von der Sollposition (0) um das zulässige Maß von der Sensoranordnung erzeugten Signal im Sinne einer Rückstellung in den Bereich der Sollposition (0) ansteuert.
